# EUROPEAN PATENT APPLICATION

(11) **EP 2 620 610 A1**
(43) Date of publication of application: **31.07.2013**
(21) Application number: 12305111.2
(22) Date of filing: 30.01.2012
(51) Int. Cl.: F01P 11/10, B60K 11/04, B62D 25/08

(54) **Motor vehicule front-end carrier comprising oblong opening and cooling module**

(71) Applicant: Faurecia Bloc Avant, 92000 Nanterre (FR)
(72) Inventor: Gillard, Laurent, Southfield, MI, 48076 (US)
(74) Representative: Blot, Philippe Robert Emile

(57) **Abstract**

Motor vehicle front-end carrier (1) comprising:
- a supporting structure (2) intended to be attached to side rails of a motor vehicle chassis, the supporting structure having a rear face (18), a front face (16) opposite the rear face, and an opening (28) for allowing an air flow (F) from the front face towards the rear face, and
- a cooling module (4) extending across the opening (28).

The opening has an oblong shape in projection on a plane perpendicular to a longitudinal direction (Ox) of the motor vehicle, the oblong shape extending along a transverse direction (Oy), perpendicular to the longitudinal direction, more than along a vertical direction (Oz), the oblong shape having a perimeter consisting of a an upper line along the vertical direction, approximately forming an arch, and a lower line along the vertical direction, approximately forming an upside-down arch.

Corresponding motor vehicle.

## Description

The present invention concerns a motor vehicle front-end carrier comprising:
- a supporting structure intended to be attached to side rails of a motor vehicle chassis, the supporting structure having a rear face, a front face opposite the rear face, and an opening for allowing an air flow from the front face towards the rear face, and
- a cooling module for thermal exchange between a fluid and the air flow, the cooling module extending across the opening.

The present invention also relates to a motor vehicle comprising a module of this type.

A front-end carrier of the type described above for example forms a motor vehicle "technical front-end carrier" and allows various vehicle components to be attached under the hood of the vehicle, such as optics, a radiator of a ventilation and air conditioning system (HVAC), an engine cooling system, engine intakes or a hood closing lock and others.

The support of the front-end carrier also plays a structural role. The front-end carrier retains the vehicle hood. The front-end carrier connects longitudinal rails of the vehicle. Also, during an impact on the front of the vehicle, the front-end carrier limits the intrusion of outside elements in the motor vehicle.

It is well known in existing front-end carriers to have a rectangular radiator located ahead of the front-end structure, or behind the front-end structure. When the radiator receives an air flow created by a circular fan, it has been noticed that the thermal efficiency of the radiator is not optimal, due to the fact that the air flow through the radiator is not even.

The document FR-A-2 816 361 discloses a way of improving this issue, thanks to additional air ducts. The fan is larger than the radiator and air that should flow above and under the radiator is blown via the ducts towards the radiator edges. However, such a structure is rather complex and implies additional costs

An aim of the invention is to provide a motor vehicle front-end carrier with an improved efficiency of the radiator and good structural properties, while remaining simple and cost efficient.

The invention therefore relates to a motor vehicle front-end carrier of the aforementioned type, wherein the opening has an oblong shape in projection on a plane perpendicular to a longitudinal direction of the motor vehicle, the oblong shape extending along a transverse direction, perpendicular to the longitudinal direction, more than along a vertical direction, the oblong shape having a perimeter consisting of a an upper line along the vertical direction, approximately forming an arch, and a lower line along the vertical direction, approximately forming an upside-down arch.

In other embodiments, the motor vehicle front-end carrier comprises one or several of the following features, taken in isolation or any feasible combination:
- the cooling module has an oblong shape in projection on the plane, the oblong shape of the cooling module approximately matching the oblong shape of the opening in projection on the plane;
- each of the oblong shapes is approximately oval or elliptic;
- each of the oblong shapes approximately has a convex perimeter consisting of two parallel segments extending along the transverse direction, defining a height of the oblong shape, and two curved lines, each approximately forming a half circle and defining a width of the oblong shape;
- the cooling module approximately fits into the opening;
- the cooling module is located between the front face and the rear face along the longitudinal direction;
- the cooling module comprises a radiator extending along the plane;
- the radiator comprises two water collectors located on either sides of the radiator along the transverse direction and flat pipes extending approximately along the transverse direction between the two water collectors;
- the cooling module comprises a condenser extending along the plane, preferably at a front end of the cooling module along the longitudinal direction;
- the condenser has an approximately oblong shape in projection on the plane, the oblong shape of the condenser having a perimeter a perimeter consisting of a an upper line along the vertical direction, approximately forming an arch, and a lower line along the vertical direction, approximately forming an upside-down arch;
- the motor vehicle front-end carrier further comprises a fan for generating the air flow;
- the fan is located at a rear end of the cooling module along the longitudinal direction.

The invention also relates to a motor vehicle comprising a chassis including side rails, **characterised in that** it further comprises a front-end carrier according to any of the preceding claims and attached to the side rails.

Other features and advantages of the invention will appear upon reading the following description, given by way of example and with reference to the accompanying drawings, in which:
- Fig. 1 is a schematic, perspective view of a motor vehicle front-end carrier according to the invention;
- Fig. 2 is a schematic, front view of the front-end carrier of Fig.1;
- Fig. 3 is a schematic, cross sectional view of the front-end carrier of Fig. 1 along III-III in Fig. 2;
- Fig. 4 is a schematic view of an opening in the front-end carrier of Fig. 1 in projection.

Within this description, the terms "longitudinal", "transverse", "front", "rear", "horizontal" and "vertical" are defined in accordance with the usual directions of an assembled motor vehicle. A longitudinal direction Ox corresponds to the length of the vehicle, with positive values towards the rear of the vehicle; a transverse direction Oy corresponds to the width of the vehicle, with positive values towards the right side of the vehicle and a vertical direction Oz points downwards.

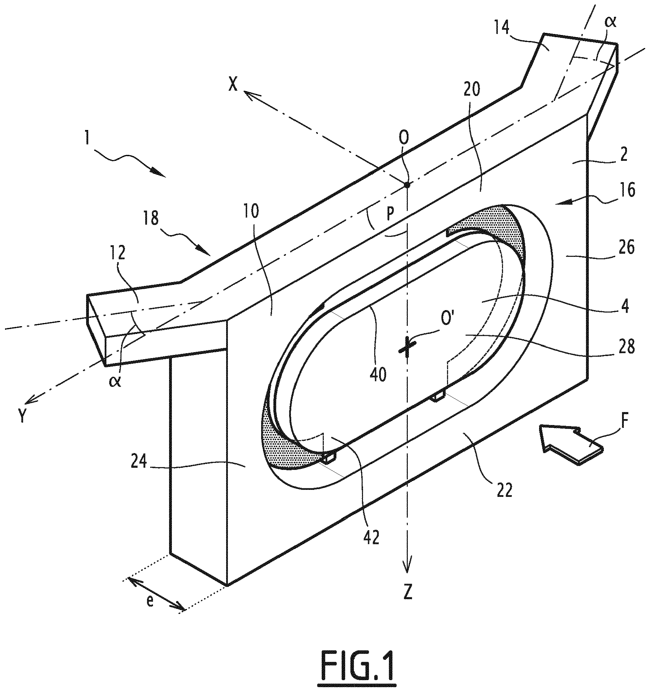

With reference to Fig. 1, 2 and 3, a front-end carrier 1 is described. The front-end carrier 1 is intended to be attached to the longitudinal ends of longitudinal sills of the vehicle, namely to the longitudinal ends of main sills and cradle extensions of a motor cradle (not shown). The front-end carrier 1 extends for example under part or all of the available height under the hood of the motor vehicle. In particular, the front-end carrier 1 is for example attached next to the upper extensions of the motor vehicle chassis.

The front-end carrier 1 comprises a supporting structure 2 extending vertically and transversely, a cooling module 4 for thermal exchange between a fluid and an atmospheric air flow flowing through the supporting structure 2, and advantageously a fan and a fan duct 8 for producing the atmospheric air flow F, for example approximately along the longitudinal direction Ox.

The supporting structure 2 may be assembled as part of the body in white of the vehicle. In that case, the supporting structure 2 is assembled at an early stage of the vehicle production process. For example the supporting structure 2 is welded to other elements of the body in white.

As an alternative, the supporting structure 2 can be assembled at a later stage of the vehicle production process, for example using bolts or any equivalent means. In that case, the supporting structure 2 is not part of the body in white of the vehicle, but is added as a module.

The supporting structure 2 includes a frame 10 approximately extending along a plane P perpendicular to the longitudinal direction Ox and two struts 12, 14 located on either sides of the frame 10 for attachment of the supporting structure 2 on the chassis, for example on fender sills supporting front wheel fenders of the chassis.

The frame 10 is for example made of a plastics material, advantageously in one single piece.

The two struts 12, 14 protrude laterally outwardly, respectively from an upper left angle and an upper right angle of the frame 10. For example the two struts 12, 14 protrude rearwardly and make an angle α with the transverse direction Oy in a horizontal plane towards the rear of the vehicle.

The frame 10 has a substantially rectangular shape in projection on the plane P along the longitudinal direction Ox and has a front face 16 and a rear face 18, opposite the front face 16, both approximately extending along the plane P. The frame 10 further comprises an upper beam 20, a lower beam 22 and two approximately vertical struts 24, 26 extending between the upper beam 20 and the lower beam 22.

Each of the upper beam 20, the lower beam 22 and the two struts 24, 26 advantageously forms a hollow structure with internal strengthening ribs. For example, the hollow structure is C-shaped.

The frame 10 comprises an opening 28, located between the two struts 24, 26 and between the upper beam 20 and the lower beam 22, for allowing the atmospheric air flow F to flow through the supporting structure 2 from the front face 16 towards the rear face 18.

The upper beam 20 comprises a lock 30 for the vehicle hood, the lock 30 being located in a middle position along the transverse direction Oy, and two hood bumpers 32 located at a distance on either sides of the lock 30 along the transverse direction Oy.

The front face 16 and the rear face 18 define an extension e of the frame 10 along the longitudinal direction Ox.

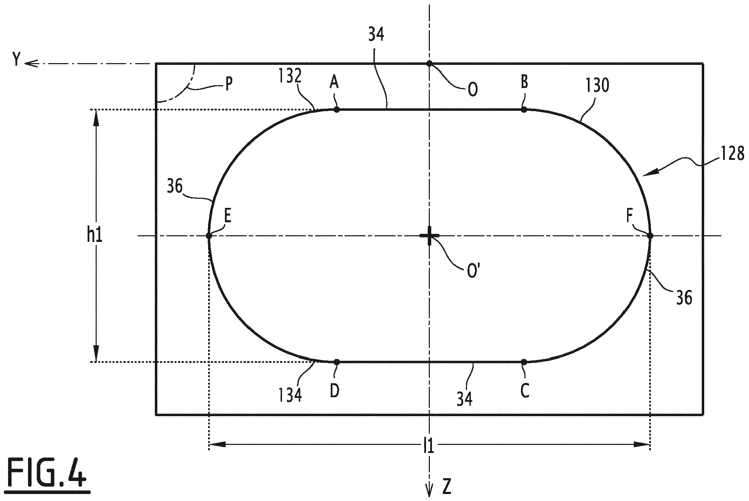

In reference with Figure 4, the opening 28 has an oblong shape 128 in projection on the plane P.

The oblong shape 128 has a perimeter 130 consisting of an upper line 132 along the vertical direction Oz, approximately forming an arch, and a lower line 134 along the vertical direction Oz, and approximately forming an upside-down arch.

The oblong shape 128 of the opening 28 extends along the transverse direction Oy with a width 11 and along the vertical direction Oz with a height h1, the width 11 being advantageously strictly larger than the height h1. For example, l1/h1 is in the range of 2 to 4.

The upper line 132 includes points E, A, B and F and the lower line 134 includes points E, D, C and F.

For example the perimeter 130 is curved. Advantageously the perimeter 130 is approximately shaped as a rice grain, that is to say with two horizontal segments 34, AB and CD, defining the height h1 of the opening 28, and two curved lines 36, AED and BFC, each approximately forming a half circle and defining the width l1 of the opening 28.

As a variant, the oblong shape 128 of the opening 28 in projection on the plane P can be approximately oval or elliptic.

Owing to the particular shape of the opening 28 described above, the upper beam 20 and a part of the two struts 24, 26 located above a horizontal plane P' splitting the opening by a middle point O', form an arch extending along the plane P.

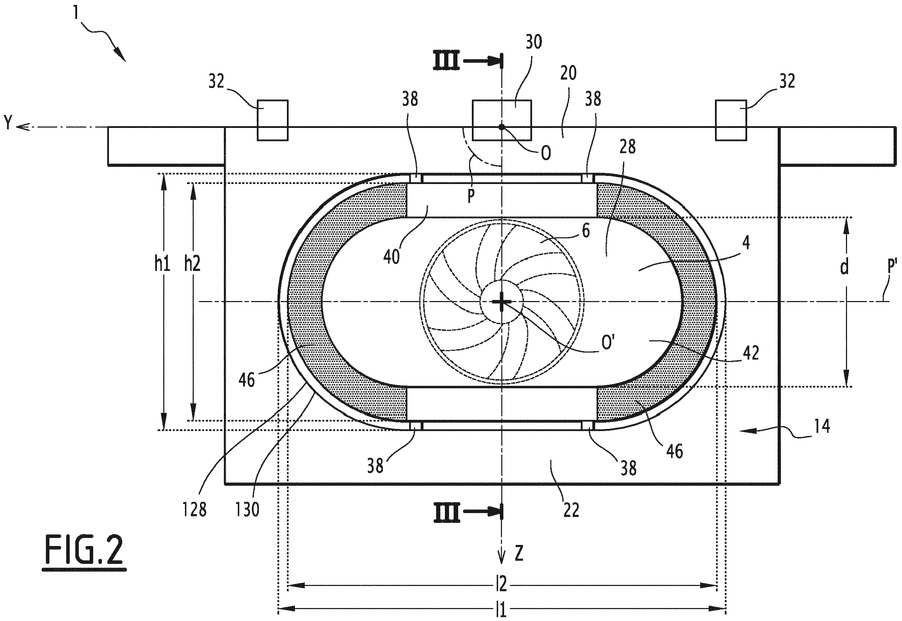

The cooling module 4 extends along the plane P and is aligned with the opening 4 along the longitudinal direction Ox for allowing the atmospheric air to flow through the cooling module. The cooling module 4 is attached to the supporting structure 2, for example by four elements 38 (Fig. 2).

The cooling module 4 also has an oblong shape in projection on the plane P according to the longitudinal direction Ox. The oblong shape of the cooling module 4 matches the oblong shape 128 of the opening 28.

With reference to Fig. 2 the oblong shape of the cooling module 4 extends along the transverse direction Oy with a width l2 and along the vertical direction Oz with a height h2.

The oblong shape of the cooling module 4 in projection on the plane P approximately fits into the oblong shape 128 of the opening 28 in projection on the plane P. In other words, the oblong shape of the cooling module 4 is only slightly smaller than the oblong shape 128 of the opening in projection on the plane P. For example, l2 is between 90% and 100% of l1 and h2 is between 90% and 100% of h1.

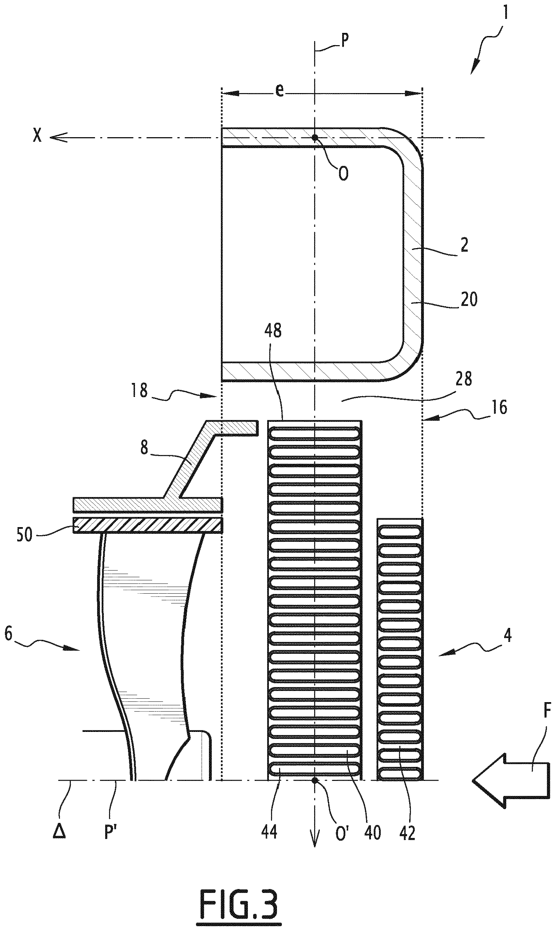

Advantageously the cooling module 4 is received inside the opening 28. The cooling module 4 advantageously fits into the supporting structure 2, not only in projection on the plane P, but physically. For example, the cooling module 4 is located within the extension e of the opening 4 along the longitudinal direction Ox (Fig. 3).

Alternatively, the cooling module 4 is offset rearward or forward relative to the supporting structure 2.

The cooling module 4 comprises a radiator 40 extending along the plane P for cooling the fluid by thermal exchange with the atmospheric air flow F, and advantageously a condenser 42 for an air conditioning system of the motor vehicle.

The condenser 42 extends along the plane P and is advantageously located at a front end of the cooling module 4 along the longitudinal direction Ox, for example within the extension e of the supporting structure.

The condenser 42 has an approximately oblong shape in projection on the plane P. Advantageously the oblong shape of the condenser 42 is similar with the above mentioned oblong shape 128 of the opening 28. The oblong shape of the condenser 42 may differ in size.

The radiator 40 comprises flat pipes 44 extending along the transverse direction Oy and two water collectors 46 located on either sides of the radiator 40 along the transverse direction Oy.

Advantageously the two water collectors 46 are symmetric with reference to the (Ox, Oz) plane and forms two half circles in projection on the plane P, the pipes 44 extending between the two water collectors 46.

The fan 6 is intended to rotate around an axis Δ parallel to the longitudinal direction Ox. The fan 6 is advantageously located at a rear end of the cooling module 4 along the longitudinal direction Ox. In the example shown in Fig. 3, the fan 6 is outside of the extension e of the supporting structure 2 along the longitudinal direction Ox, while the fan duct 8 is partly within the extension e.

For example the fan 6 has a diameter d which is comprised between 50% and 100% of h2.

The fan duct 8 (Fig. 3) is located between a circumference 48 of the radiator 40 along the plane P and a circumference 50 of the fan 6 along the plane P.

In operation, the fan 6 generates the atmospheric air flow F through condenser 42 and the radiator 40, via the opening 28. All parts of the radiator 40 along the plane P advantageously receive an approximately uniform air flow.

Hot water from the vehicle motor flows from one of the water collectors 46 to the other one of the water collectors 46 and is cooled by thermal exchange with the atmospheric air flow F. The cooled water is then returned to the vehicle motor.

The supporting structure 2 withstands horizontal strains from the vehicle chassis and vertical strains, for example when the hood bumps into the hood bumpers 32 or via the lock 30 when the motor vehicle runs.

Thanks to the particular shapes of the cooling module 4 and the opening 28 as described above, there is no significant "dead" corner in the radiator 40 along the plan P. The radiator 40 achieves an efficient thermal exchange over its whole surface along the plane P. So does the condenser 42. Also, the arch formed by the upper part of the supporting structure 2 has better structural properties than a straight upper beam supported by straight lateral struts, in particular regarding vertical strains.

As a variant, the front-end carrier 1 may comprise several fans and/or the supporting structure 2 may have several openings of the above mentioned type.

## Claims

1. Motor vehicle front-end carrier (1) comprising:
- a supporting structure (2) intended to be attached to side rails of a motor vehicle chassis, the supporting structure (2) having a rear face (18), a front face (16) opposite the rear face (18), and an opening (28) for allowing an air flow (F) from the front face (18) towards the rear face (16), and
- a cooling module (4) for thermal exchange between a fluid and the air flow (F), the cooling module (4) extending across the opening (28),
**characterised in that** the opening (28) has an oblong shape (128) in projection on a plane (P) perpendicular to a longitudinal direction (Ox) of the motor vehicle, the oblong shape extending along a transverse direction (Oy), perpendicular to the longitudinal direction (Ox), more than along a vertical direction (Oz), the oblong shape (128) having a perimeter (130) consisting of a an upper line (132) along the vertical direction (Oz), approximately forming an arch, and a lower line (134) along the vertical direction (Oz), approximately forming an upside-down arch.

2. Motor vehicle front-end carrier (1) according to claim 1, **characterised in that** the cooling module (4) has an oblong shape in projection on the plane (P), the oblong shape of the cooling module (4) approximately matching the oblong shape (128) of the opening (28) in projection on the plane (P).

3. Motor vehicle front-end carrier (1) according to claim 2, **characterised in that** each of the oblong shapes is approximately oval or elliptic.

4. Motor vehicle front-end carrier (1) according to claim 2, **characterised in that** each of the oblong shapes approximately has a convex perimeter consisting of:
- two parallel segments (34) extending along the transverse direction (Oy), defining a height (h1, h2) of the oblong shape, and
- two curved lines (36), each approximately forming a half circle and defining a width (11, 12) of the oblong shape.

5. Motor vehicle front-end carrier (1) according to any of claims 1 to 4, **characterised in that** the cooling module (4) approximately fits into the opening (28).

6. Motor vehicle front-end carrier (1) according to any of claims 1 to 5, **characterised in that** the cooling module (4) is located between the front face (16) and the rear face (18) along the longitudinal direction (Ox).

7. Motor vehicle front-end carrier (1) according to any of claims 1 to 6, **characterised in that** the cooling module (4) comprises a radiator (40) extending along the plane (P).

8. Motor vehicle front-end carrier (1) according to claim 7, **characterised in that** the radiator (40) comprises two water collectors (46) located on either sides of the radiator (40) along the transverse direction (Oy) and flat pipes (44) extending approximately along the transverse direction (Oy) between the two water collectors (46).

9. Motor vehicle front-end carrier (1) according any of claims 1 to 8, **characterised in that** the cooling module (4) comprises a condenser (42) extending along the plane (P), preferably at a front end of the cooling module (4) along the longitudinal direction (Ox).

10. Motor vehicle front-end carrier (1) according to claim 9, **characterised in that** the condenser (42) has an approximately oblong shape in projection on the plane (P), the oblong shape of the condenser (42) having a perimeter a perimeter consisting of a an upper line along the vertical direction (Oz), approximately forming an arch, and a lower line along the vertical direction (Oz), approximately forming an upside-down arch.

11. Motor vehicle front-end carrier (1) according any of claims 1 to 10, **characterised in that** it further comprises a fan (6) for generating the air flow (F).

12. Motor vehicle front-end carrier (1) according to claim 10, **characterised in that** the fan (6) is located at a rear end of the cooling module (4) along the longitudinal direction (Ox).

13. Motor vehicle comprising a chassis including side rails, **characterised in that** it further comprises a front-end carrier (1) according to any of the preceding claims and attached to the side rails.

## Amended claims

### Amended claims in accordance with Rule 137(2) EPC.

**1.** Motor vehicle front-end carrier (1) comprising:
- a supporting structure (2) intended to be attached to side rails of a motor vehicle chassis, the supporting structure (2) having a rear face (18), a front face (16) opposite the rear face (18), and an opening (28) for allowing an air flow (F) from the front face (18) towards the rear face (16), and
- a cooling module (4) for thermal exchange between a fluid and the air flow (F), the cooling module (4) extending across the opening (28),
**characterised in that** the opening (28) has an oblong shape (128) in projection on a plane (P) perpendicular to a longitudinal direction (Ox) of the motor vehicle, the oblong shape extending along a transverse direction (Oy), perpendicular to the longitudinal direction (Ox), more than along a vertical direction (Oz), the oblong shape (128) having a perimeter (130) consisting of a an upper line (132) along the vertical direction (Oz), approximately forming an arch, and a lower line (134) along the vertical direction (Oz), approximately forming an upside-down arch, and **in that** the cooling module (4) has an oblong shape in projection on the plane (P), the oblong shape of the cooling module (4) approximately matching the oblong shape (128) of the opening (28) in projection on the plane (P).

**2.** Motor vehicle front-end carrier (1) according to claim 1, **characterised in that** each of the oblong shapes is approximately oval or elliptic.

**3.** Motor vehicle front-end carrier (1) according to claim 1 or 2, **characterised in that** each of the oblong shapes approximately has a convex perimeter consisting of:
- two parallel segments (34) extending along the transverse direction (Oy), defining a height (h1, h2) of the oblong shape, and
- two curved lines (36), each approximately forming a half circle and defining a width (11, 12) of the oblong shape.

**4.** Motor vehicle front-end carrier (1) according to any of claims 1 to 3 **characterised in that** the cooling module (4) approximately fits into the opening (28).

**5.** Motor vehicle front-end carrier (1) according to any of claims 1 to 4, **characterised in that** the cooling module (4) is located between the front face (16) and the rear face (18) along the longitudinal direction (Ox).

**6.** Motor vehicle front-end carrier (1) according to any of claims 1 to 5, **characterised in that** the cooling module (4) comprises a radiator (40) extending along the plane (P).

**7.** Motor vehicle front-end carrier (1) according to claim 6, **characterised in that** the radiator (40) comprises two water collectors (46) located on either sides of the radiator (40) along the transverse direction (Oy) and flat pipes (44) extending approximately along the transverse direction (Oy) between the two water collectors (46).

**8.** Motor vehicle front-end carrier (1) according any of claims 1 to 7, **characterised in that** the cooling module (4) comprises a condenser (42) extending along the plane (P), preferably at a front end of the cooling module (4) along the longitudinal direction (Ox).

**9.** Motor vehicle front-end carrier (1) according to claim 8, **characterised in that** the condenser (42) has an approximately oblong shape in projection on the plane (P), the oblong shape of the condenser (42) having a perimeter a perimeter consisting of a an upper line along the vertical direction (Oz), approximately forming an arch, and a lower line along the vertical direction (Oz), approximately forming an upside-down arch.

**10.** Motor vehicle front-end carrier (1) according any of claims 1 to 9, **characterised in that** it further comprises a fan (6) for generating the air flow (F).

**11.** Motor vehicle front-end carrier (1) according to claim 9, **characterised in that** the fan (6) is located at a rear end of the cooling module (4) along the longitudinal direction (Ox).

**12.** Motor vehicle comprising a chassis including side rails, **characterised in that** it further comprises a front-end carrier (1) according to any of the preceding claims and attached to the side rails.
